# FASCICULE DE BREVET EUROPEEN

(11) **EP 1 488 192 B1**
(45) Date de publication et mention de la délivrance du brevet: **15.11.2006**
(21) Numéro de dépôt: 03738201.7
(22) Date de dépôt: 26.03.2003
(51) Int. Cl.: G01B 7/16, G01L 1/22

(54) **DISPOSITIF DE MESURE EXTENSOMETRIQUE**
AUSDEHNUNGSMESSSONDE
STRAIN-MEASURING DEVICE

(30) Priorité: 27.03.2002 FR 0203815
(43) Date de publication de la demande: 22.12.2004
(73) Titulaire: Maubant, Philippe, 68340 Riquewihr (FR); Tridemy, Régis, 68200 Mulhouse (FR)
(72) Inventeur: MAUBANT, Philippe, F-68340 Riquewihr (FR); TRIDEMY, Régis, F-68200 Mulhouse (FR)
(74) Mandataire: Nithardt, Roland
(86) Numéro de dépôt international: PCT/FR2003/000955
(87) Numéro de publication internationale: WO 2003/081170

(56) Documents cités:
- WO-A-00/57149
- WO-A-99/41565
- FR-A- 2 701 317
- US-A- 4 314 481
- US-A- 5 353 645

## Description

La présente invention concerne un dispositif de mesure extensométrique comportant au moins un élément déformable placé entre au moins deux plots de montage définissant une surface de fixation pour être fixés sur une structure à mesurer, des moyens de mise en précontrainte dudit élément déformable, des moyens de mesure de la contrainte subie par ledit élément déformable et des moyens de traitement des signaux.

Les mesures extensométriques consistent à détecter les déformations d'une structure sous l'effet de contraintes dues à des forces appliquées, au relâchement de contraintes résiduelles et/ou à des dilatations thermiques. La mesure de l'élongation ou de la contraction d'une surface de cette structure suivant une direction connue est réalisée habituellement au moyen d'un élément déformable précontraint ou non, par exemple une lame élastique, fixé à ses extrémités en deux points de fixation de la surface à mesurer. Le déplacement des extrémités de l'élément déformable, représentatif du déplacement des deux points de fixation de la surface à mesurer, modifie le rayon de courbure de l'élément déformable. Pour réaliser un dispositif de mesure extensométrique, on associe à cet élément déformable des moyens de mesure aptes à mesurer les contraintes qu'il subit. Ces moyens de mesure sont constitués par exemple d'un capteur de vibration mesurant la fréquence propre de vibration de l'élément déformable associé à un moyen d'excitation en vibration, d'un capteur sans contact mesurant la flèche de cet élément déformable, d'une ou de plusieurs jauges d'extensométrie collées sur une ou les deux faces de cet élément déformable, etc.

Dans le brevet américain US-A-5353.645, le dispositif de mesure de déformation est logé dans un alésage d'une structure à contrôler et comporte un élément déformable qui s'étend au travers de cet alésage et qui est couplé à l'une de ses extrémités à un capteur de pression ou de force et à l'autre extrémité à ladite structure. Ce capteur peut être disposé dans un plot vissé sur la structure de manière à mettre l'élément déformable sous contrainte. Néanmoins, ce mode de mise en précontrainte ne peut être réalisé que sur la structure à contrôler et n'est ni reproductible, ni contrôlable.

Le brevet américain US-A-4.314.481 décrit un dispositif de mesure de traction utilisant une bride fixée sur une pièce à contrôler au moyen d'une vis de fixation et associée à un capteur piézoélectrique disposé au droit d'un des points d'appui de la bride sur la pièce. Ce capteur piézoélectrique est constitué par deux rondelles piézoélectriques superposées et sensibles au cisaillement. Pour pouvoir fonctionner, ce dispositif est mis sous contrainte par la vis de fixation. Dans ce cas, la précontrainte est directement liée au couple de serrage de la vis de fixation et ne produit pas les mêmes effets que celle appliquée à un élément déformable.

Dans la publication FR-A-2.701.317, l'élément déformable en flexion est une lame pliée en forme d'Oméga. Cette forme particulière nécessite des zones de pliage difficilement reproductibles. De ce fait, les caractéristiques mécaniques de cette lame sont différentes de l'une à l'autre. La fixation directe des extrémités de la lame sur la surface à mesurer peut être délicate et ne permet aucune conservation des préréglages. Aucune maîtrise de la précontrainte n'est possible avec cette forme de lame particulière. De plus, cette conception ne permet pas de réaliser un dispositif de mesure extensométrique intégré en une seule pièce mais nécessite un montage plus ou moins artisanal en plusieurs pièces, d'où une mise en oeuvre complexe et coûteuse.

La publication WO-A-00/57149 propose un dispositif de mesure extensométrique sous la forme d'un ensemble intégré mais présentant encore certains inconvénients. Le mode de fixation de l'élément déformable dans les plots de montage provoque un moment relativement important qui nécessite de fixer ces plots de montage sur la surface à mesurer au moyen de vis d'un diamètre relativement important donc d'effectuer des taraudages non négligeables dans la structure sous contrainte. Ce moment interdit la fixation des plots de montage par un simple collage. C'est pourquoi, ce dispositif prévoit d'interposer des cales sous les plots de montage, recevant les vis de fixation des plots de montage, ces cales pouvant être collées sur la surface à mesurer. Néanmoins, elles augmentent considérablement la surface de collage. Par ce type de montage, l'élément déformable est éloigné de la surface à mesurer, ce qui entraîne une sensibilité aux déformations parasites et une erreur d'étalonnage importante en flexion. Le mode de fixation de l'élément déformable est un montage hyperstatique, mais avec une sensibilité mécanique assez faible et une grande sensibilité à la température, rendant sa compensation très délicate. Ce dispositif comporte un moyen de réglage de la précontrainte. Cependant, le réglage de la précontrainte, qui définit les caractéristiques de l'extensomètre, n'est possible qu'après sa fixation sur la surface à mesurer ou sur un support quelconque et n'est donc pas reproductible. De plus, aucun dispositif ne permet de conserver ce réglage après démontage et/ou pendant le transport. Enfin, la conception du dispositif ne permet d'intégrer qu'un circuit électronique de conditionnement élémentaire, et son montage reste assez complexe.

Le dispositif de mesure extensométrique décrit dans la publication WO-A-99/41565 concerne essentiellement un dispositif produit en série, à moindre coût et destiné à être collé sur une surface à mesurer en admettant des dilatations très importantes de cette surface, notamment thermiques. L'élément déformable précontraint est bloqué pendant le transport par des moyens qui n'assurent pas le réglage de la précontrainte. Le réglage de la précontrainte ne peut être effectué que par un dispositif annexe extérieur au dispositif. Toutefois, ce réglage n'est pas suffisamment fiable et nécessite un ré-étalonnage in situ. L'équilibrage des efforts n'est réalisé que très approximativement car le ressort de compensation travaillant en traction n'est pas réglable. On ne peut corriger les efforts que dans une direction, obligeant à poser l'élément déformable sur des appuis simples. Les conséquences en sont une mise au point délicate et un positionnement du dispositif sensible aux chocs et aux variations du cycle de fonctionnement. La linéarité et l'hystérésis sont fortement influencées par la qualité des appuis et donc très difficiles à maîtriser.

Les mesures extensométriques peuvent être utilisées dans une multitude d'applications telles que dans des équipements de sécurité, de régulation et/ou de contrôle pour :
- mesurer des efforts appliqués à une structure, ,
- surveiller les déformations d'un ouvrage ou d'une structure sous des charges de service ou accidentelles,
- mesurer le couple d'entraînement ou de freinage dans un véhicule,
- réaliser des pesées,
- contrôler les surcharges.
Néanmoins, compte tenu de leurs inconvénients, les techniques utilisées actuellement dans les dispositifs de mesure extensométrique ne permettent pas de généraliser leur utilisation dans ces applications.

La présente invention vise à pallier ces inconvénients en proposant un dispositif de mesure extensométrique miniature et intégré, de conception simple et économique, pouvant être produit en série à moindre coût, dont les réglages sont fiables, reproductibles et indéréglables, pouvant être mis en place rapidement sur la structure à mesurer sans technicien spécialisé et sans modifier cette structure.

Dans ce but, l'invention concerne un dispositif de mesure extensométrique du genre indiqué en préambule, caractérisé en ce que les moyens de mise en précontrainte s'étendent entre au moins les deux plots de montage et sont agencés pour rapprocher ces deux plots de montage en translation et imposer une courbure de précontrainte précise audit élément déformable, ces moyens de mise en précontrainte étant également agencés pour autoriser un déplacement relatif en translation de ces deux plots de montage lorsque ledit élément déformable est précontraint.

Dans une forme de réalisation préférée, les moyens de mise en précontrainte sont montés libres au moins en translation dans un des plots de montage et sont liés au moins en translation à l'autre plot de montage. Ces moyens de mise en précontrainte peuvent comporter au moins une tige de précontrainte, dont au moins la partie liée en translation audit plot de montage est filetée et coopère avec au moins un écrou pour déplacer ledit plot de montage et au moins un organe de compensation agencé pour exercer une force de rappel entre ladite tige de précontrainte et un des plots de montage.

Dans une variante de réalisation, les moyens de mise en précontrainte peuvent être liés au moins en translation aux deux plots de montage. Ces moyens de mise en précontrainte peuvent alors comporter au moins une tige de précontrainte, dont au moins les parties liées en translation auxdits plots de montages sont filetées en sens inverse, au moins deux écrous agencés pour recevoir lesdites parties filetées de la tige de précontrainte et au moins un organe de compensation agencé pour exercer une force de rappel entre lesdits plots de montage.

Selon les formes de réalisation choisies, l'écrou peut être intégré ou rapporté au plot de montage correspondant. Il peut aussi être constitué d'un alésage taraudé prévu dans ledit plot de montage. On peut également prévoir un écrou supplémentaire rapporté sur l'extrémité de la partie filetée de ladite tige de précontrainte et formant un contre-écrou de blocage. La tige de précontrainte peut être choisie dans le groupe comprenant au moins les vis, les boulons, les goujons, et l'organe de compensation peut être choisi dans le groupe comprenant au moins les ressorts, les rondelles élastiques, les cales en élastomère, les lames ressort.

Dans certains cas, le dispositif de mesure extensométrique peut comporter un seul élément déformable disposé entre deux plots de montage sensiblement parallèlement à la surface de fixation de ces plots et agencé pour se déformer dans un plan sensiblement perpendiculaire à cette surface. Dans ce cas, les moyens de mise en précontrainte peuvent comporter deux tiges de précontrainte ou une tige de précontrainte et une tige de guidage, disposées parallèlement et symétriquement par rapport au plan médian passant par cet élément déformable.

Dans d'autres cas, les moyens de mise en précontrainte peuvent comporter une seule tige de précontrainte disposée dans le plan médian passant par ledit élément déformable, cet élément déformable peut alors comporter un évidement central de dimensions transversales supérieures à celles de la tige de précontrainte.

Dans d'autres cas encore, le dispositif de mesure peut comporter deux éléments déformables disposés entre deux mêmes plots de montage, symétriquement par rapport à un plan médian dudit dispositif, sensiblement perpendiculairement à la surface de fixation de ces plots et agencés pour se déformer dans un plan sensiblement parallèle à cette surface. Dans ce cas, les moyens de mise en précontrainte comportent une seule tige de précontrainte disposée dans ce plan médian.

Pour mesurer des déformations dans au moins deux directions, le dispositif de mesure extensométrique peut comporter au moins deux et de préférence trois plots de montage distincts et un plot de montage commun.

Dans une des variantes de réalisation, le dispositif de mesure extensométrique comporte au moins un élément déformable s'étendant entre ledit plot de montage commun et chaque plot de montage distinct, lesdits éléments déformables étant décalés angulairement d'un angle α, cet angle ayant une valeur choisie parmi le groupe comprenant au moins 30°, 45°, 60°, 90° et 120°.

Dans une autre variante de réalisation, le dispositif de mesure extensométrique comporte au moins un élément déformable s'étendant entre chaque paire de plots de montage distincts, lesdits éléments déformables étant disposés sensiblement en triangle.

L'élément déformable est, de préférence, constitué d'une lame élastique réalisée dans une matière choisie dans le groupe comprenant au moins les aciers inoxydables à durcissement structural ou non, les alliages de titane, les alliages de cuivre au béryllium. L'élément déformable et les plots de montage peuvent être avantageusement formés d'une seule pièce dans une matière dont le coefficient de dilatation est proche de celui de la structure à mesurer, cette matière étant choisie dans le groupe ci-dessus comprenant également les alliages d'aluminium à haute limite élastique. Dans ce cas, ledit élément déformable est usiné ou découpé de manière à lui donner une courbure initiale en direction de sa courbure de précontrainte.

Selon les résultats escomptés, l'élément déformable peut être monté par au moins une de ses extrémités dans un des plots de montage par au moins une technique choisie dans le groupe comprenant au moins l'encastrement, l'emboîtement, le vissage, le rivetage, le collage, la soudure. Ledit plot de montage peut comporter une zone de montage destinée à recevoir ladite extrémité de l'élément déformable, cette zone de montage étant avantageusement inclinée par rapport à la surface de fixation dudit plot de montage de manière à donner audit élément déformable une courbure initiale en direction de sa courbure de précontrainte.

Selon les applications, les plots de montage sont avantageusement destinés à être fixés sur ladite structure à mesurer par au moins une technique choisie dans le groupe comprenant au moins le vissage, le rivetage, le collage, la soudure.

En fonction de la technique utilisée, les moyens de mesure de la contrainte subie par ledit élément déformable sont choisis dans le groupe comprenant au moins les jauges de contrainte résistives, les capteurs piézo-électriques, les capteurs de vibration, les capteurs de proximité sans contact.

D'une manière préférentielle, les jauges de contrainte sont au nombre de quatre et montées en pont de Wheatstone.

Le dispositif de mesure extensométrique comporte de préférence un boîtier de protection couvrant au moins partiellement les plots de montage et le ou les éléments déformables, ce boîtier pouvant être étanche en fonction de l'environnement.

Les moyens de traitement des signaux comportent au moins un circuit électronique de conditionnement, ce circuit pouvant être intégré ou rapporté audit boîtier, ou déporté et relié audit boîtier par des moyens de communication. Ces moyens de traitement peuvent également être agencés pour mesurer la température interne du dispositif et corriger les valeurs des signaux en fonction de cette température.

La présente invention et ses avantages apparaîtront mieux dans la description suivante d'exemples de réalisation, non limitatifs, en référence aux dessins annexés, dans lesquels :
- la figure 1 est une vue en coupe longitudinale d'une première forme de réalisation du dispositif de mesure extensométrique unidirectionnel selon l'invention,
- les figures 2A, 2B et 2C sont des vues en coupe transversale du dispositif de la figure 1 selon les lignes de coupe AA, BB et CC,
- la figure 3 est une vue similaire à la figure 1 d'une deuxième forme de réalisation du dispositif de l'invention,
- les figures 4 à 6 sont des vues de dessus en coupe de trois autres formes de réalisation du dispositif de l'invention,
- la figure 7 est une vue schématique de profil du dispositif de l'invention,
- la figure 8 est une vue schématique du montage électrique des jauges de contrainte utilisées dans le dispositif de l'invention,
- les figures 9A, 9B et 9C représentent trois exemples d'implantation des jauges de contrainte de la figure 8, et
- les figures 10 et 11 représentent, en vue de dessus, deux exemples d'un dispositif de mesure extensométrique bi-directionnel selon l'invention.

La conception mécanique du dispositif de mesure extensométrique 10-14 unidirectionnel selon l'invention peut prendre plusieurs formes de réalisation suivant la précision et l'étendue de la mesure désirée. Dans toutes les formes de réalisation, le dispositif de mesure extensométrique 10-14 comporte un ou deux éléments déformables précontraints 20-24 s'étendant entre au moins deux plots de montage 30, 40 qui peuvent faire partie intégrante du ou des éléments déformables (non représentés) ou être formés de pièces rapportées comme illustré. Au moins une des extrémités de chaque élément déformable 20-24 est fixée dans un des plots de montage 30, 40. Ces plots de montage 30, 40 définissent par leur face inférieure une surface de fixation leur permettant d'être fixés sur une surface d'une structure 1 à mesurer par des vis de fixation 50 et/ou par collage. Les contraintes de traction ou de compression subies par la structure 1 à mesurer entraînent pour les plots de montage 30, 40 des déplacements différentiels. Ces déplacements déforment le ou les éléments déformables 20-24 en augmentant ou en réduisant son ou leur rayon de courbure. On enregistre la déformation de chaque élément déformable 20-24 à l'aide de moyens de mesure 60 tels que des jauges de contrainte résistives collées sur l'une des faces ou sur les deux faces de chaque élément déformable, d'un capteur de déplacement enregistrant sa flèche, d'un capteur piézo-électrique disposé, comme précisé plus loin, dans au moins un des plots de montage pour enregistrer la variation de la force de réaction de chaque élément déformable, etc. On peut également exciter en vibration le ou les éléments déformables et mesurer sa ou leur fréquence propre à l'aide d'un capteur de vibration. Les signaux fournis par ces moyens de mesure 60 sont analysés par des moyens de traitement 70 intégrés, rapportés ou déportés.

Le dispositif de mesure extensométrique 10-14 unidirectionnel de l'invention se distingue de l'état de la technique par des moyens de mise en précontrainte 80 qui s'étendent entre les deux plots de montage 30, 40 et qui sont agencés pour rapprocher ces deux plots de montage 30, 40 et imposer une courbure de précontrainte précise et réglable à ou aux éléments déformables 20-24. Ces moyens de mise en précontrainte 80 sont également agencés pour autoriser un déplacement relatif entre les deux plots de montage 30, 40 quand le ou les éléments déformables 20-24 sont précontraints.

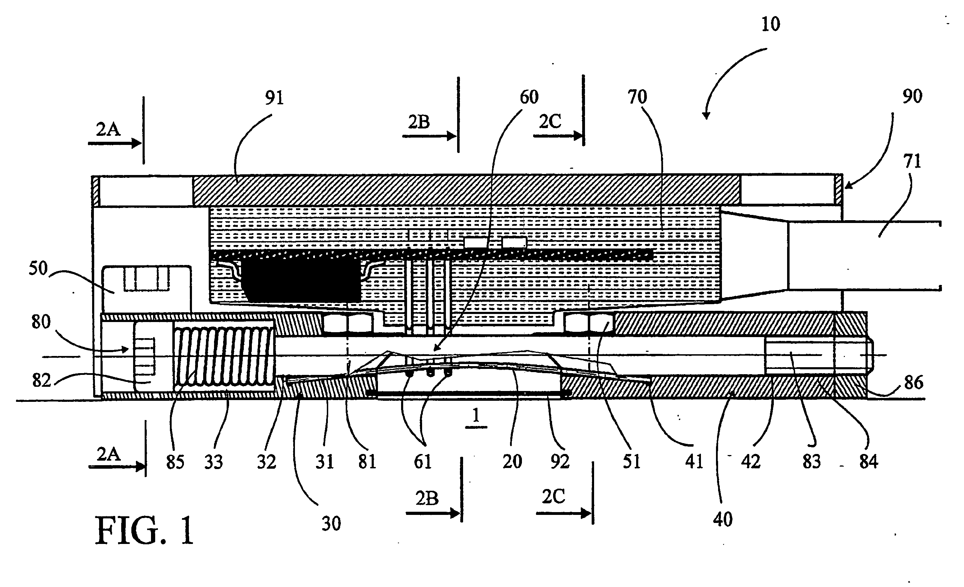

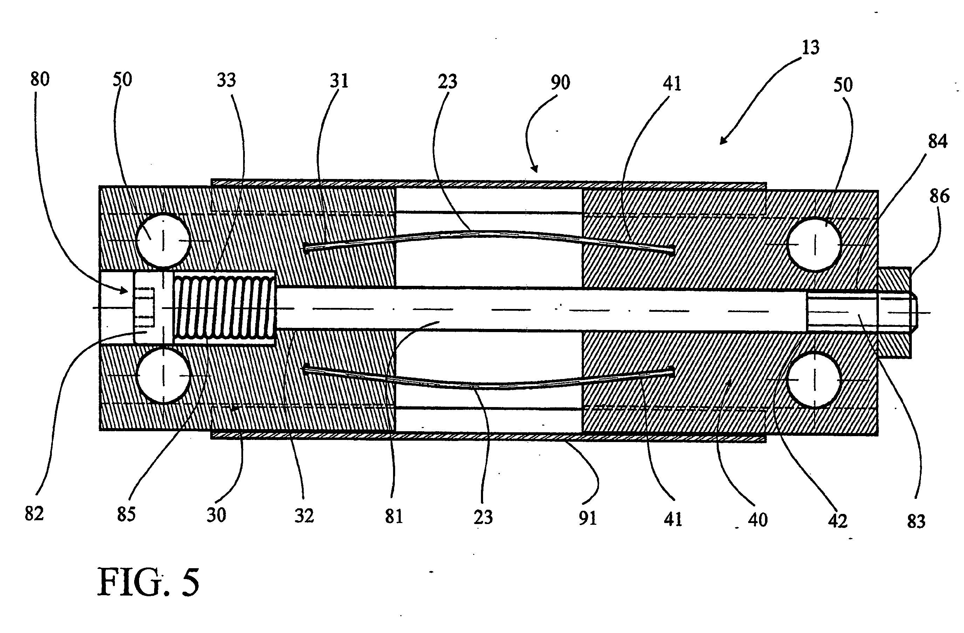

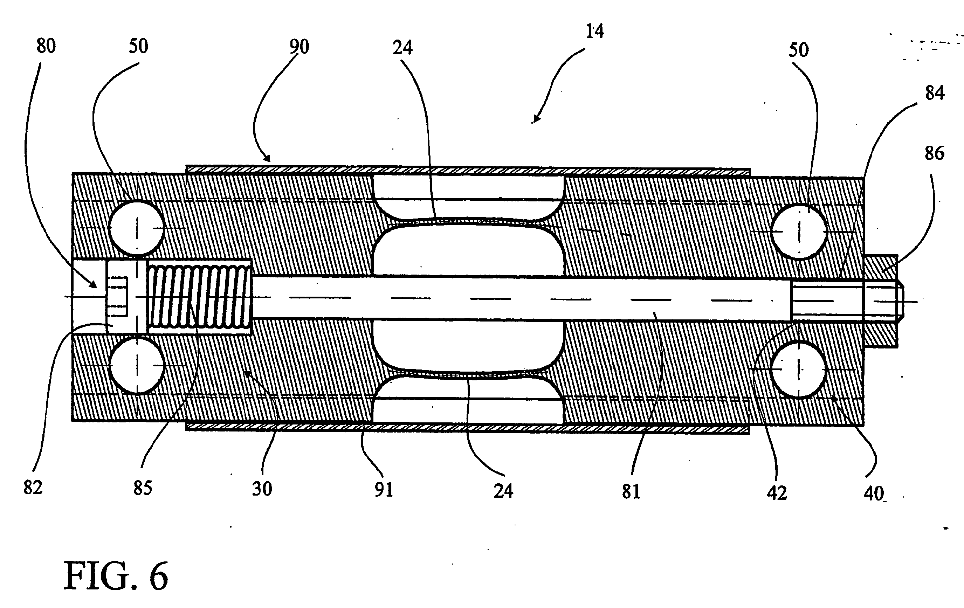

Plus particulièrement en référence aux figures 5 et 6, le dispositif de mesure extensométrique 13, 14 unidirectionnel se distingue également de l'état de la technique en ce qu'il comporte deux éléments déformables 23, 24 symétriques par rapport à un plan médian et disposés sensiblement perpendiculairement à la surface de fixation des plots et donc à la structure 1 à mesurer pour qu'ils se déforment dans un plan parallèle à cette surface. A l'inverse, dans les autres formes de réalisation en référence aux figures 1 à 4, le dispositif de mesure extensométrique 10-12 comporte un élément déformable 20-22 central, disposé sensiblement parallèlement à la surface de fixation des plots pour qu'il se déforme dans un plan perpendiculaire à cette surface.

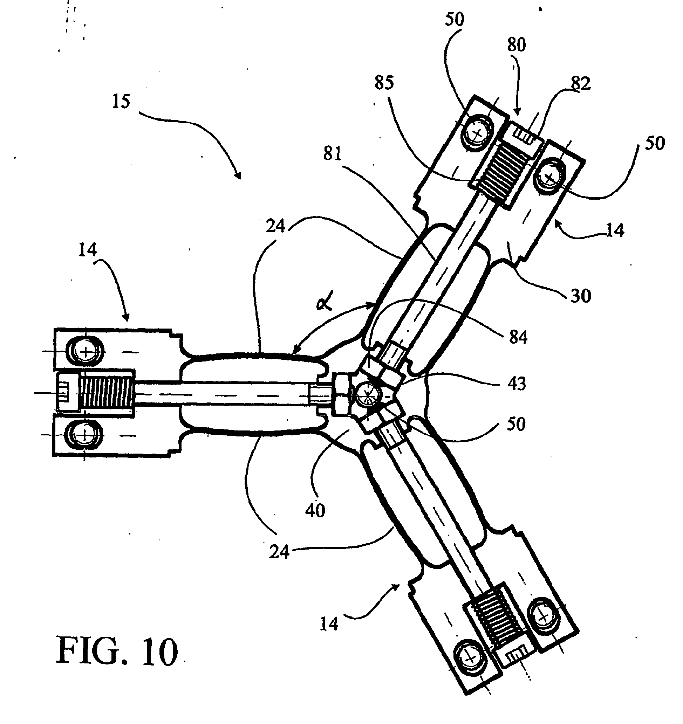

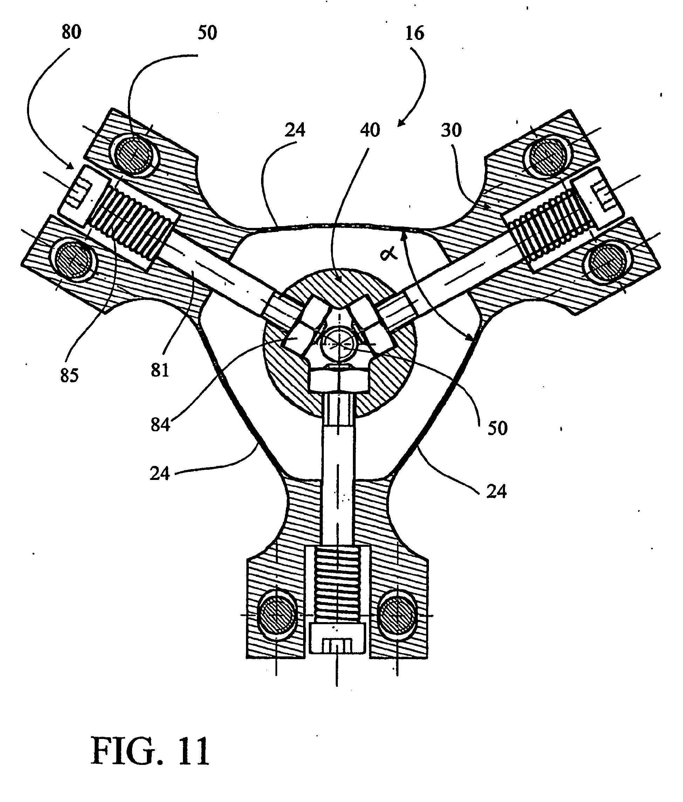

Enfin et en référence aux figures 10 et 11, les dispositif de mesure extensométrique 15 et 16 se distinguent plus particulièrement de l'état de la technique en ce qu'ils intègrent en une seule pièce plusieurs dispositifs de mesure unidirectionnels permettant de mesurer les déformations dans au moins deux directions.

Dans les exemples illustrés, le ou les éléments déformables 20-24 sont constitués d'au moins une lame élastique réalisée en acier inoxydable à durcissement structural ou non, en alliage de titane, de cuivre ou de béryllium, etc., formant ou non une seule pièce avec les plots de montage 30, 40. Les moyens de mise en précontrainte 80 sont formés d'au moins une tige de précontrainte 81 pourvue au moins d'une tête 82 à une extrémité et d'une partie filetée 83 à l'autre extrémité associée à un écrou 84 et coopérant avec un organe de compensation 85. Cette tige de précontrainte 81 peut être un boulon, une vis, un goujon, une tige à deux filetages inversés, l'écrou 84 peut être intégré, rapporté ou constitué d'un taraudage dans un des plots de montage 30, 40 et l'organe de compensation 85 peut être un ressort de compression ou de traction selon son positionnement, un empilage de rondelles élastiques, une cale en élastomère, une ou plusieurs lames ressort et tout moyen élastique équivalent dont la raideur peut être choisie et/ou ajustée selon besoin. L'ensemble formé par la tige de précontrainte 81 et l'écrou 84 peut également être remplacé par un axe associé à un excentrique, une came, des crans, ou tout moyen équivalent permettant de déplacer en translation un plot de montage par rapport à l'autre de manière précise et reproductible. Si les moyens de mesure 60 sont constitués de capteurs piézo-électriques, ces derniers peuvent être positionnés sous la tête 82 de la tige de précontrainte 81, sous l'organe de compensation 85 ou sous l'écrou 84.

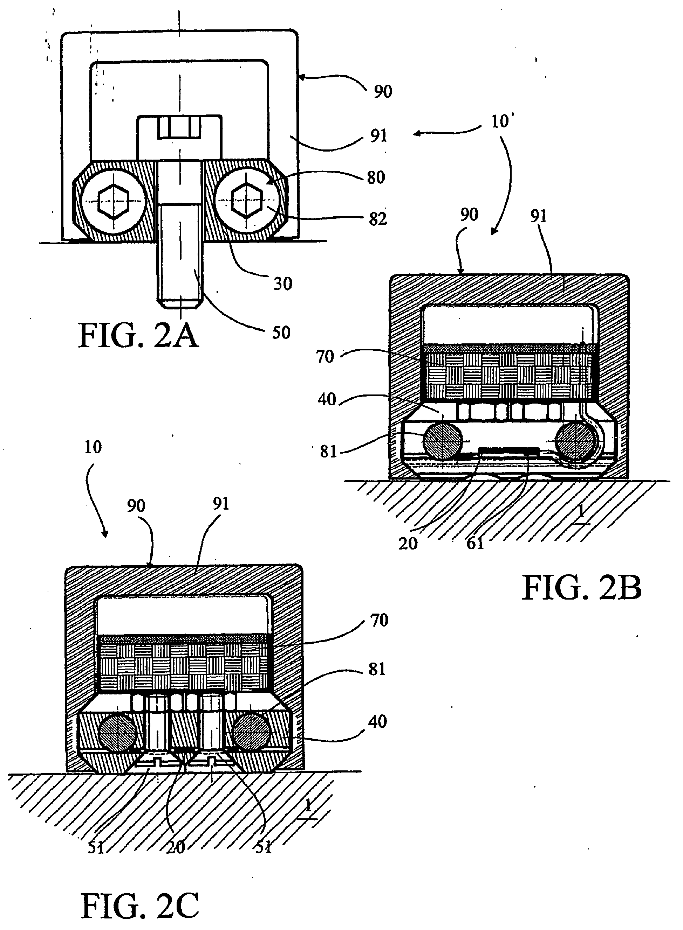

Une première forme de réalisation du dispositif de mesure extensométrique 10 est illustrée dans les figures 1 et 2, la figure 1 étant une vue en coupe longitudinale de ce dispositif selon un plan de coupe passant par une tige de précontrainte 81 et les figures 2A à 2C étant des vues en coupe transversale selon des plans de coupe passant respectivement par une vis de fixation 50 du plot de montage 30 sur la structure 1 à mesurer, par l'élément déformable 20 et par les vis de fixation 51 de l'élément déformable 20 dans le plot de montage 40. Dans cet exemple, l'élément' déformable 20 a une forme sensiblement rectangulaire. Chaque extrémité de cet élément déformable 20, formé par les petits côtés du rectangle, est encastrée dans une fente 31, 41 prévue dans le plot de montage 30, 40 correspondant et fixée par deux vis de fixation 51. Ces fentes 31, 41 sont inclinées par rapport à la surface de fixation des plots pour imposer à cet élément déformable 20 une courbure initiale en direction de sa courbure de précontrainte. La fixation des extrémités de l'élément déformable 20 peut également être obtenue par tout autre moyen tel que par une soudure laser, un bombardement électronique, un serrage direct des deux vis de fixation, etc. Ces autres moyens de fixation permettent, le cas échéant, de supprimer les fentes 31, 41 coûteuses à usiner dans les plots de montage 30, 40. Dans tous les cas, les plots de montage 30, 40 comportent une zone de montage inclinée par rapport à leur surface de fixation pour donner à l'élément déformable 20 une courbure initiale en direction de sa courbure de précontrainte.

Les moyens de mise en précontrainte 80 de l'élément déformable 20 comportent deux tiges de précontrainte 81 disposées parallèlement et symétriquement par rapport à l'élément déformable 20 de manière à répartir les efforts uniformément et à imposer à l'élément déformable 20 une déformation par flambage dans une seule direction, cette direction pouvant être prédéfinie par la courbure initiale qui lui est donnée lors de son montage dans les plots de montage 30, 40. Chaque tige de précontrainte 81 traverse librement le plot de montage 30 disposé à proximité de sa tête 82 au travers d'un alésage lisse 32 et se visse dans un taraudage 42 prévu dans l'autre plot de montage 40, ce taraudage 42 constituant l'écrou 84. Un contre-écrou 86 est prévu à l'extrémité de la tige de précontrainte 81 pour éviter tout risque de dévissage et donc de déréglage de la précontrainte. Pour réduire les coûts de fabrication, chaque tige de précontrainte 81 peut traverser librement les plots de montage 30 et 40 au travers d'alésages lisses 32 et 42 pour se visser dans l'écrou 86 formant l'écrou 84 rapporté par exemple dans un logement le bloquant en rotation prévu dans le plot de montage 40.

L'une des deux tiges de précontrainte 81 peut être remplacée par une simple tige de guidage lisse. La présence des deux tiges de précontrainte 81 simplifie la réalisation en permettant d'utiliser des pièces identiques. Cette réalisation permet de régler précisément la courbure de précontrainte de l'élément déformable 20 et de rendre ce réglage reproductible puisque l'entraxe entre les deux plots de montage 30, 40 est mesurable et peut être reproduit facilement. De plus, les tiges de précontrainte 81 permettent de lier mécaniquement les deux plots de montage 30, 40 évitant tout risque de déréglage. De plus, cette réalisation permet d'équilibrer les efforts en fonctionnement sur les points de fixation des plots de montage 30, 40 sur la structure 1 à mesurer, rendant très faibles les interactions avec cette structure, et permettant de conserver le réglage de la précontrainte pendant le transport ou en cas de démontage du dispositif de mesure extensométrique 10. Un organe de compensation 85 est disposé coaxialement sur chaque tige de précontrainte 81 entre sa tête 82 et le plot de montage 30 dans un logement 33 prévu à cet effet. Il autorise un mouvement relatif entre les deux plots de montage 30,40 pour qu'ils puissent suivre les déformations de la structure 1 à mesurer.

Les moyens de traitement 70 des signaux émis par les moyens de mesure 60 sont constitués par un circuit électronique de conditionnement placé directement au-dessus de l'élément déformable 20 et des plots de montage 30, 40. Il permet d'intégrer les circuits de régulation de tension, de réglage de gain, de décalage d'offset et de compensation thermique sans prévoir de résistances de compensation de température sur l'élément déformable 20 . Toutefois, il est possible d'ajouter de telles résistances de compensation de température, suivant des dispositions parfaitement connues de l'homme de métier, pour améliorer la précision de la compensation thermique.

Ce dispositif de mesure extensométrique 10 est logé dans un boîtier de protection 90 qui peut être étanche ou non selon l'environnement dans lequel il est placé. Dans l'exemple illustré, le boîtier de protection 90 n'est pas étanche et comporte un couvercle 91 recouvrant les parties supérieure et latérales du dispositif de mesure extensométrique 10 ainsi qu'une plaque 92 disposée entre les deux plots de montage 30, 40. Le boîtier de protection 90 reste ouvert à ses extrémités pour laisser passer une nappe de fils conducteurs 71 permettant l'alimentation électrique des jauges de contrainte, le raccordement du circuit électronique de conditionnement 70 vers un appareil de lecture des signaux et/ou vers une unité de gestion informatisée par exemple (non représentée). Le couvercle 91 peut être solidarisé aux plots de montage 30, 40 par emboîtement, clippage ou surmoulage. La plaque 92 peut servir de butée pour éviter de détériorer l'élément déformable 20 par un serrage excessif des moyens de mise en précontrainte 80.

Le montage et le réglage du dispositif de mesure extensométrique 10 s'effectuent de la manière suivante. L'élément déformable 20 est monté dans les plots de montage 30, 40 par encastrement de ses extrémités dans les fentes 31, 41 puis fixé solidairement par les quatre vis de fixation 51. L'inclinaison des fentes 31, 41 déforme élastiquement l'élément déformable 20 qui prend une courbure initiale. Les tiges de précontrainte 81 avec leur organe de compensation 85 sont engagées dans le plot de montage 30 puis vissées dans le plot de montage 40. La rotation des tiges de compensation 81, au moyen d'un outil adapté à l'empreinte prévue dans la tête 82, a pour effet de comprimer les organes de compensation 85 et d'attirer les plots de montage 30, 40 l'un vers l'autre, entraînant la flexion et l'augmentation du rayon de courbure de l'élément déformable 20 provoquant ainsi sa précontrainte. La présence des organes de compensation 85 rend le réglage plus fin. Leur réaction permet d'équilibrer les efforts horizontaux exercés par l'élément déformable 20 sur les plots de montage 30, 40. Le guidage des plots de montage 30, 40 par les tiges de précontrainte 81 équilibre les moments imposés à ces plots et provoqués par le flambage de l'élément déformable 20. Ce guidage impose à l'élément déformable 20 une déformation dans une seule direction générant un rapprochement de ses deux points de fixation, donc des deux plots de montage 30, 40, d'une certaine valeur. La connaissance de cette valeur permet la reproductibilité du réglage de la précontrainte de l'élément déformable 20.

Une fois le dispositif de mesure extensométrique 10 préréglé, on peut le coller et/ou le visser sur la surface d'une structure 1 à mesurer dans le but de mesurer les déformations de cette structure, ou préalablement sur une pièce étalon dans le but d'étalonner et de régler les caractéristiques électriques des moyens de mesure 60. Les organes de compensation 85, s'opposant aux efforts horizontaux de l'élément déformable 20, réduisent les efforts en ses points de fixation dans les plots de montage 30, 40. Néanmoins, l'élasticité de ces organes de compensation 85 permet le fonctionnement du dispositif de mesure extensométrique 10 sans avoir besoin de retirer les tiges de précontrainte 81. La disposition particulière de ces tiges de précontrainte 81 permet d'utiliser des vis de fixation 50 de section réduite ou un simple collage sans risque de fluage du dispositif de mesure extensométrique 10.

Cette première forme de réalisation, qui utilise un montage hyperstatique de l'élément déformable 20, permet d'obtenir une forte sensibilité, une bonne précision de mesure et une bonne reproductibilité de la précontrainte. Par contre, elle limite l'étendue de mesure, complique sensiblement le montage et peut présenter des dérives thermiques importantes. En effet, les montages hyperstatiques ne permettent aucun degré de liberté pour les dilatations et entraînent de ce fait des contraintes thermiques élevées.

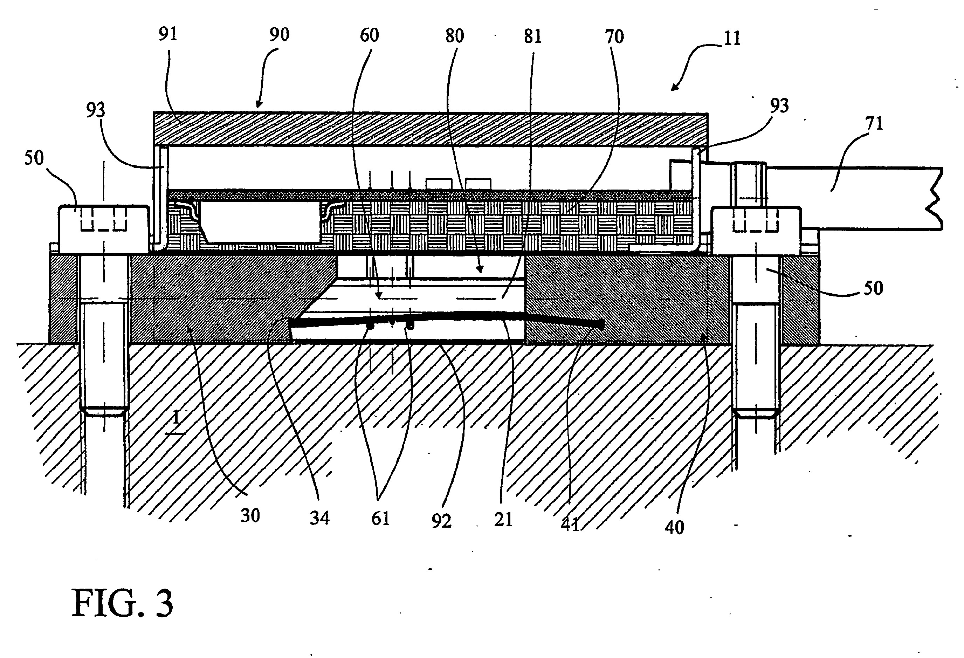

Une deuxième forme de réalisation d'un dispositif de mesure extensométrique 11 est représentée dans la figure 3 qui est une vue en coupe longitudinale selon un plan de coupe passant par les vis de fixation 50 du dispositif sur la structure 1 à mesurer. Dans cette variante, l'élément déformable 21 est encastré d'un seul coté dans une fente 41 du plot de montage 40, formant une poutre dite "cantilever". L'autre extrémité est maintenue dans l'autre plot de montage 30 par un bec 34 en appui supérieur. Comme dans l'exemple précédent, la fente 41 est inclinée par rapport à la surface de fixation des plots pour donner à l'élément déformable 21 une courbure initiale en direction de sa courbure de précontrainte. Ce montage est isostatique et permet une plus grande étendue de mesure à encombrement égal et une sensibilité réduite aux variations thermiques car il offre un degré de liberté plus important. Le boîtier de protection 90 comporte deux parois d'extrémité 93 qui obturent sensiblement les ouvertures ménagées entre les plots de montage 30, 40 et le couvercle 91. Une des parois d'extrémité 93 permet le passage de la nappe de fils conducteurs 71 du circuit électronique de conditionnement 70.

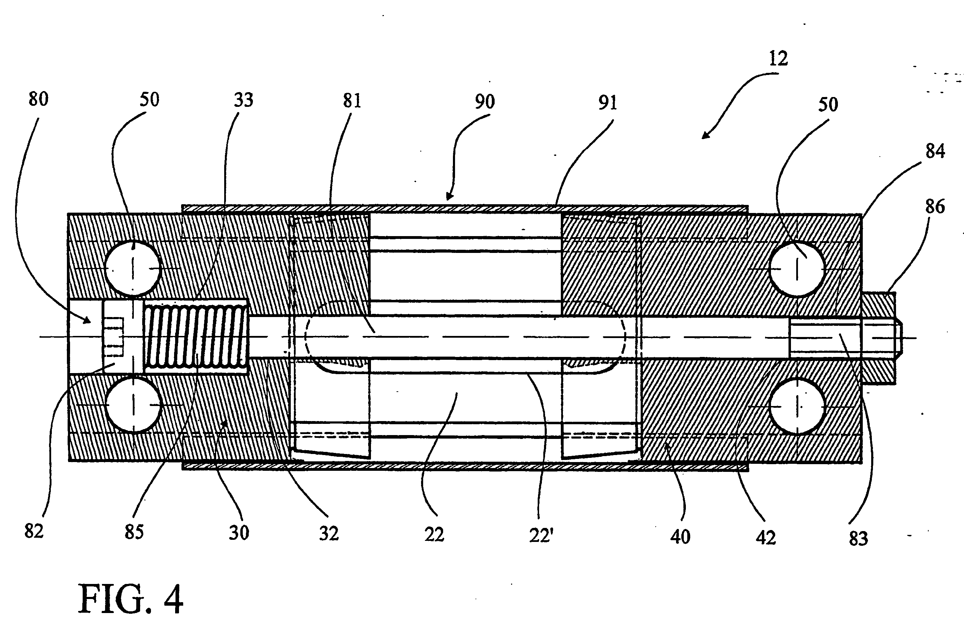

Trois autres formes de réalisation sont représentées respectivement dans les figures 4 à 6, dans lesquelles le dispositif de mesure extensométrique 12,13,14 ne comporte qu'une seule tige de précontrainte 81, disposée dans le plan médian du dispositif. Ces figures 4 à 6 sont des vues de dessus en coupe selon un plan de coupe passant par cette tige de précontrainte 81 et montrant trois exemples de réalisation de l'élément déformable 22, 23, 24.

Dans la troisième forme de réalisation en référence à la figure 4, le dispositif de mesure extensométrique 12 comporte un élément déformable 22 de forme sensiblement rectangulaire plus large que les précédents 20, 21. Cet élément déformable 22 comporte un évidement central 22' d'une largeur supérieure au diamètre de la tige de précontrainte 81 pour la laisser passer lorsqu'il est précontraint. Les extrémités de cet élément déformable 22 forment une assise plus large dans les plots de montage 30, 40 et assurent une déformation de l'élément déformable 22 dans une seule direction, cette direction pouvant être prédéfinie par une courbure initiale donnée à cet élément déformable 22 lors de son montage. Cette construction étant équilibrée dans le plan horizontal, une seule tige de précontrainte 81 est nécessaire. L'évidement central 22' allège la section de l'élément déformable 22 et évite d'augmenter exagérément les efforts horizontaux en ses points de fixation. La forme de cet élément déformable 22 peut présenter des avantages pour l'implantation des jauges de contrainte 60 (non représentées sur cette figure). Sa fixation dans les plots de montage 30, 40 peut être réalisée selon le montage hyperstatique de la figure 1 ou selon le montage isostatique de la figure 3.

Dans la quatrième forme de réalisation en référence à la figure 5, le dispositif de mesure extensométrique 13 comporte deux éléments déformables 23 identiques et montés symétriquement par rapport au plan médian du dispositif de mesure extensométrique 13, de part et d'autre de la tige de précontrainte 81. Comme dans l'exemple précédent, l'objectif de cette réalisation est d'équilibrer les efforts de réaction des éléments déformables 23 dans les plots de montage 30, 40. Dans cette réalisation, les éléments déformables 23 sont montés sur leur champ et leurs extrémités sont encastrées dans des fentes 31, 41 prévues dans les plots de montage 30, 40 et inclinées par rapport au plan médian pour donner aux éléments déformables 23 une courbure initiale en direction de leur courbure de précontrainte. Dans ce montage, les moments de réaction des deux éléments déformables 23, d'axes verticaux, tendant à faire tourner les plots de montage 30, 40 dans un plan horizontal, s'équilibrent mutuellement. L'organe de compensation 85 compense de la même manière les réactions horizontales et la somme des réactions exercées sur la structure 1 à mesurer est nulle lorsque le dispositif de mesure extensométrique 13 est en position initiale. Le guidage axial de la tige de précontrainte 81 dans les plots de montage 30, 40 devient inutile du fait de la parfaite symétrie du montage permettant d'équilibrer les efforts. Le seul effort s'exerçant sur la structure à mesurer est la différence entre la réaction des éléments déformables 23 et de l'organe de compensation 85 pour une position de fonctionnement donnée.

Dans la cinquième forme de réalisation en référence à la figure 6, le dispositif de mesure extensométrique 14 diffère du précédent en ce que les deux plots de montage 30, 40 et les deux éléments déformables 24 sont formés par une seule pièce plate de faible épaisseur. Cette variante est avantageuse d'un point de vue économique compte tenu de la réduction du nombre de pièces et de la facilité de montage ainsi que d'un point de vue mécanique compte tenu de la suppression des non-linéarités inévitables dans tout assemblage. De plus, elle peut être réalisée à moindre coût, cette pièce pouvant être obtenue par découpage de tôles laminées ou rectifiées par tout moyen connu comme l'électroérosion au fil, le jet d'eau, la découpe à l'outil, etc. Pour réaliser cette pièce, on choisira de préférence une matière dont le coefficient de dilatation est proche de celui de la structure à mesurer 1, comme par exemple un acier inoxydable, un acier à haute limite élastique type Z200 C12, un acier à durcissement structural, les alliages de titane, les alliages de cuivre au béryllium, les alliages d'aluminium à haute limite élastique, etc. Dans cette forme de réalisation, les éléments déformables 24 sont usinés ou découpés suivant une courbe pour leur donner une courbure initiale en direction de leur courbure de précontrainte.

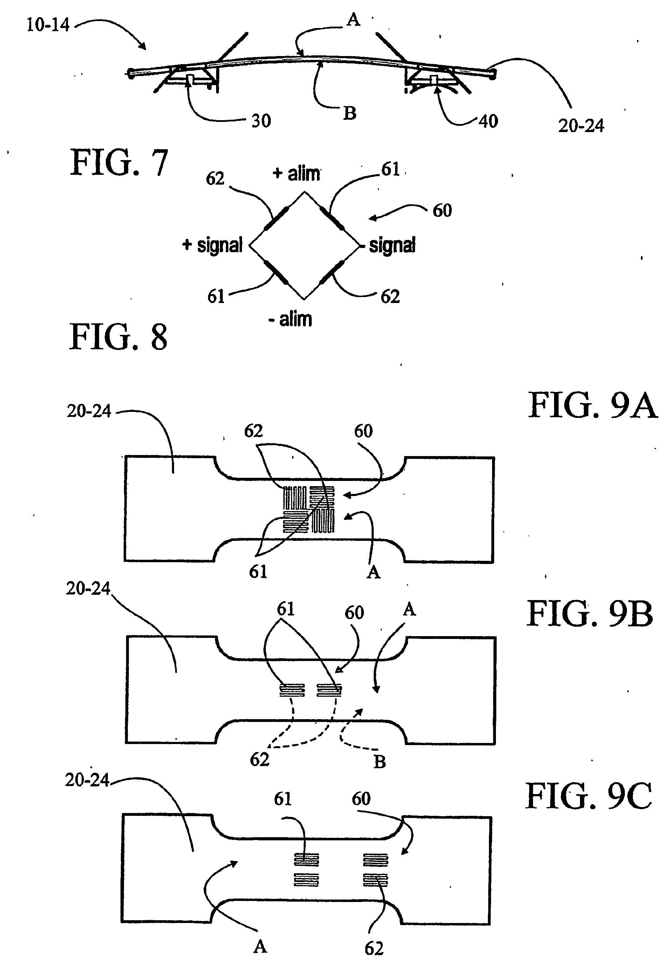

Quelle que soit la forme de réalisation du dispositif de mesure extensométrique 10-14 selon l'invention, la déformée du ou des éléments déformables 20-24 est similaire. Chaque élément déformable 20-24 présente, en référence au schéma de la figure 7, une face convexe A et une face concave B. La face convexe A présente des contraintes positives de traction dans la zone médiane et des contraintes négatives de compression dans les zones d'encastrement. Sur la face concave B, les signes des contraintes sont inversés. Plusieurs implantations des moyens de mesure 60 sont alors possibles. On ne présente que des montages dits en pont complet ou pont de Wheatstone utilisant quatre jauges de contrainte 61, 62, permettant d'obtenir le signal le plus fort et le moins perturbable. Les quatre jauges de contrainte 61, 62 sont connectées suivant le schéma de la figure 8. Les signaux de deux jauges de contrainte 61 ou 62 opposées s'additionnent et les signaux de deux jauges adjacentes 61, 62 se retranchent, ce qui permet en jouant sur les positions des jauges de contrainte 61, 62 d'obtenir des combinaisons de signaux intéressantes. Dans les réalisations des figures 1 à 4, les quatre jauges 61, 62 sont réparties sur une ou sur les deux faces de l'élément déformable 20-22 et, dans les réalisations des figures 5 et 6, les quatre jauges 61, 62 sont réparties deux à deux sur une ou sur les deux faces de chaque élément déformable 23, 24.

Les figures 9A à 9C illustrent trois dispositions possibles des jauges de contrainte 61, 62. Dans la figure 9A, les quatre jauges de contrainte 61, 62 sont disposées sur une seule face A ou B de l'élément déformable. Elles sont positionnées côte à côte en carré et sont inversées l'une par rapport à l'autre. Il s'agit d'une disposition dite "en pont de traction". Les deux jauges de contrainte 61 orientées longitudinalement recueillent la déformation principale et les deux jauges de contrainte 62 orientées transversalement enregistrent une contraction de signe inverse, appelée "effet de Poisson". Le signal par rapport à une seule jauge de contrainte 61, 62 est multiplié par 2,6. Cette disposition nécessite de très petites jauges de contrainte 61, 62 et est particulièrement avantageuse dans le cas de jauges de contrainte déposées en couches minces.

Dans la figure 9B, on colle les jauges de contrainte 61, 62 alignées deux à deux longitudinalement au milieu de chaque face A et B de l'élément déformable 20-24. Cette disposition a l'avantage de fournir un signal plus important et de permettre l'utilisation de jauges de contrainte 61, 62 plus grandes. Mais leur mise en place est plus complexe.

Dans la figure 9C, on dispose les quatre jauges de contrainte 61, 62 sur une seule face A ou B de l'élément déformable 20-24. Elles sont positionnées en rectangle et orientées longitudinalement. Cette disposition se révèle la plus intéressante car elle permet de recueillir un signal presque aussi important qu'avec la disposition de la figure 9B, tout en ne nécessitant d'équiper qu'une seule face de l'élément déformable 20-24 en profitant du changement de signe des contraintes près des extrémités de l'élément déformable 20-24.

Dans les dispositifs de mesure extensométrique 10-14 représentés dans les figures 1 à 7, la disposition des jauges de contrainte 61, 62 conformément aux figures 8 et 9 est telle que le ou les éléments déformables 20-24 ne sont sensibles qu'aux déformations linéiques de la structure à mesurer 1, c'est-à-dire dirigées dans l'axe longitudinal de chaque élément déformable 20-24. Cela implique de connaître par avance la direction des déformations à mesurer.

Dans les dispositifs de mesure extensométrique 13 et 14 des figures 5 et 6, on peut aisément disposer les jauges de contrainte 61, 62 de telle manière que les éléments déformables 23 et 24 soient sensibles aux distorsions (efforts de cisaillement). A cet effet, on peut connecter, en référence à la figure 9C, les deux jauges de contrainte 61 du milieu dans deux branches adjacentes du pont de Wheatstone et les jauges de contrainte 62 d'extrémité dans les deux branches restantes du pont.

Dans l'hypothèse où la direction des déformations à mesurer n'est pas connue, le dispositif de mesure extensométrique doit pouvoir détecter des déformations bidirectionnelles contenues dans un plan au moyen de deux ou trois éléments déformables orientés selon des directions différentes. Il faut en effet pouvoir déterminer trois inconnues : les deux élongations principales' et leur angle d'orientation dans un même plan.

La conception originale du dispositif de mesure extensométrique 10-14 selon l'invention permet d'apporter une solution simple et économique en combinant deux ou trois dispositifs similaires en un seul. La figure 10 illustre un exemple de réalisation d'un dispositif de mesure extensométrique 15 bi-directionnel combinant trois dispositifs de mesure extensométrique 14 de la figure 6. Les trois dispositifs de mesure extensométrique 14 sont assemblés en un seul autour d'un plot de montage 40 commun et disposé au centre. Les trois autres plots de montage 30 sont disposés à égale distance du plot central 40 et sont décalés angulairement les uns des autres d'un angle α sensiblement égal à 120° de manière à couvrir 360°. D'autres configurations sont possibles. De préférence, on choisit des valeurs d'angle α commodes pour les calculs, comme par exemple 45°, dans ce cas le dispositif couvre 90°, ou 60° dans ce cas le dispositif couvre 120°. 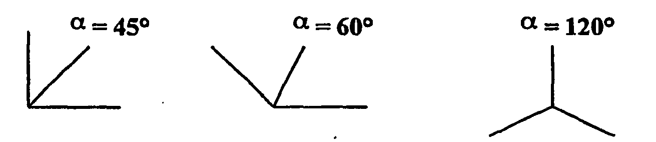 La figure 11 illustre un autre exemple de réalisation d'un dispositif de mesure extensométrique 16 bi-directionnel comprenant également trois plots de montage 30 disposés à égale distance d'un plot central 40 et décalés angulairement les uns des autres d'un angle α sensiblement égal à 120° de manière à couvrir 360°. La différence réside dans les éléments déformables 24 qui sont au nombre de trois et s'étendent chacun entre deux plots de montage 30 pour former sensiblement un triangle ou un delta.

Le fait de réaliser un dispositif de mesure extensométrique 15, 16 bi-directionnel en utilisant la technologie utilisée dans le dispositif 14 permet de fabriquer simplement et à moindre coût l'ensemble formé par les plots de montage 30, 40 et les éléments déformables 24 en une seule pièce découpée. Les éléments déformables 24 sont, de préférence, usinés ou découpés en suivant une légère courbe pour leur donner une courbure initiale en direction de leur courbure de précontrainte. Ils sont précontraints indépendamment ou par paire au moyen d'une ou de deux tiges de précontrainte 81, chacune vissée dans un écrou 84 rapporté et logé dans un évidement 43 prévu dans le plot de montage 40 central. Cette précontrainte est bien entendu reproductible et indéréglable comme dans toutes les variantes de réalisation décrites précédemment. Dans le dispositif de mesure extensométrique 16, le plot de montage 40 commun et central peut ne pas être collé ou fixé sur la structure 1 à mesurer.

Chaque élément déformable 24 est équipé de jauges de contrainte 61, 62 et fonctionne comme un capteur unidirectionnel. On utilise ensuite les propriétés connues de l'homme du métier du cercle de Mohn pour déterminer les modules et les directions principales des déformations de la structure 1 à mesurer. On peut reconstituer la matrice des déformations en un point dans la direction des éléments déformables 24. Dans cette réalisation particulière, on génère trois signaux différents que l'on peut traiter ultérieurement ou directement par le circuit électronique de conditionnement qui intègre alors les calculs nécessaires au traitement des signaux.

Chaque élément déformable 24 peut recevoir quatre jauges de contrainte 61, 62 positionnées et câblées pour être sensibles aux déformations longitudinales et au moins un des éléments déformable 24 peut recevoir quatre jauges de contrainte 61, 62 positionnées et câblées pour être sensibles au cisaillement. Dans ce cas et uniquement pour le dispositif de mesure extensométrique 15, il est possible de n'utiliser que deux dispositifs de mesure 14 disposés à angle droit.

Il ressort clairement de la présente description que Invention permet d'atteindre les buts fixés. La conception particulière du dispositif de mesure extensométrique 10-16 permet une mise en oeuvre et une utilisation très simples grâce à l'optimisation de certaines caractéristiques :
- La pose de ce dispositif de mesure 10-16 sur la structure 1 à mesurer est très rapide, économique et ne nécessite pas l'intervention d'un technicien spécialisé.
- La pose ne nécessite aucune modification de la structure 1 à mesurer.
- La raideur du dispositif de mesure 10-16 est très faible devant celle de la structure 1 à mesurer et n'a de ce fait aucune influence sur elle.
- L'équilibrage des efforts aux points de fixation permet une pose du dispositif de mesure 10-16 sur la structure 1 à mesurer uniquement à l'aide de petites vis de fixation 50 ou d'un simple collage.
- Le dispositif de mesure 10-16 peut être rendu entièrement étanche dans le cas de conditions d'environnement sévères.
- Le circuit électronique de conditionnement 70 peut être intégré.
- De nombreuses caractéristiques peuvent être programmées avant l'utilisation de ce dispositif de mesure 10-16, telles que le rapport entre la déformation mesurée et le signal électrique de sortie, la compensation de la dilatation de l'élément déformable 20-24.
- Certaines caractéristiques peuvent être reprogrammées à distance sans intervention mécanique sur le dispositif de mesure 10-16, telles que la valeur du décalage, un réétalonnage précis in situ, etc.

Bien entendu, la présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif de mesure extensométrique (10-16) comportant au moins un élément déformable (20-24) placé entre au moins deux plots de montage (30, 40) définissant une surface de fixation pour être fixés sur une structure (1) à mesurer, des moyens de mise en précontrainte (80) dudit élément déformable (20-24), des moyens de mesure (60) de la contrainte subie par ledit élément déformable (20-24) et des moyens de traitement (70) des signaux de mesure, **caractérisé en ce que** les moyens de mise en précontrainte (80) s'étendent entre au moins les deux plots de montage (30, 40) et sont agencés pour rapprocher ces deux plots de montage (30, 40) en translation et imposer une courbure de précontrainte précise audit élément déformable (20-24), ces moyens de mise en précontrainte (80) étant également agencés pour autoriser un déplacement relatif en translation de ces deux plots de montage (30, 40) lorsque ledit élément déformable (20-24) est précontraint.

2. Dispositif selon la revendication 1, **caractérisé en ce que** les moyens de mise en précontrainte (80) sont montés libres au moins en translation dans un des plots de montage (30) et sont liés au moins en translation à l'autre plot de montage (40).

3. Dispositif selon la revendication 2, **caractérisé en ce que** les moyens de mise en précontrainte (80) comportent au moins une tige de précontrainte (81), dont au moins la partie (83) liée en translation audit plot de montage (40) est filetée et coopère avec au moins un écrou (84) pour déplacer ledit plot de montage (40) et au moins un organe de compensation (85) agencé pour exercer une force de rappel entre ladite tige de précontrainte (81) et un des plots de montage (30).

4. Dispositif selon la revendication 1, **caractérisé en ce que** les moyens de mise en précontrainte (80) sont liés au moins en translation aux deux plots de montage (30, 40).

5. Dispositif selon la revendication 4, **caractérisé en ce que** les moyens de mise en précontrainte (80) comportent au moins une tige de précontrainte, dont au moins les parties liées en translation auxdits plots de montages (30, 40) sont filetées en sens inverse, au moins deux écrous agencés pour recevoir lesdites parties filetées de la tige de précontrainte et au moins un organe de compensation agencé pour exercer une force de rappel entre lesdits plots de montage (30, 40).

6. Dispositif selon la revendication 3 ou 5, **caractérisé en ce que** ledit écrou (84) est intégré ou rapporté audit plot de montage (40) correspondant.

7. Dispositif selon la revendication 3 ou 5, **caractérisé en ce que** ledit écrou (84) est constitué d'un alésage taraudé (42) prévu dans ledit plot de montage (30, 40).

8. Dispositif selon la revendication 3 ou 5, **caractérisé en ce que** les moyens de mise en précontrainte (80) comportent au moins un écrou supplémentaire (86) rapporté sur l'extrémité de la partie filetée de ladite tige de précontrainte (81) et formant un contre-écrou de blocage.

9. Dispositif selon la revendication 3 ou 5, **caractérisé en ce que** la tige de précontrainte (81) est choisie dans le groupe comprenant au moins les vis, les boulons, les goujons.

10. Dispositif selon la revendication 3 ou 5, **caractérisé en ce que** l'organe de compensation (85) est choisi dans le groupe comprenant au moins les ressorts, les rondelles élastiques, les cales en élastomère, les lames ressort.

11. Dispositif selon la revendication 3 ou 5, **caractérisé en ce qu'**il comporte un seul élément déformable (20, 21, 22) disposé entre deux mêmes plots de montage (30, 40) sensiblement parallèlement à la surface de fixation de ces plots et agencé pour se déformer dans un plan sensiblement perpendiculaire à cette surface.

12. Dispositif selon la revendication 11, **caractérisé en ce que** les moyens de mise en précontrainte (80) comportent deux tiges de précontrainte (81) disposées parallèlement et symétriquement par rapport au plan médian passant par ledit élément déformable (20, 21).

13. Dispositif selon la revendication 11, **caractérisé en ce que** les moyens de mise en précontrainte (80) comportent une tige de précontrainte (81) et une tige de guidage disposées parallèlement et symétriquement par rapport au plan médian passant par ledit élément déformable (20, 21).

14. Dispositif selon la revendication 11, **caractérisé en ce que** les moyens de mise en précontrainte (80) comportent une tige de précontrainte (81) disposée dans le plan médian passant par ledit élément déformable (22).

15. Dispositif selon la revendication 14, **caractérisé en ce que** ledit élément déformable (22) comporte un évidement central (22') de dimensions transversales supérieures à celles de ladite tige de précontrainte (81).

16. Dispositif selon la revendication 3 ou 5, **caractérisé en ce qu'**il comporte deux éléments déformables (23, 24) disposés entre deux mêmes plots de montage (30, 40) symétriquement par rapport à un plan médian dudit dispositif, sensiblement perpendiculairement à la surface de fixation de ces plots et agencés pour se déformer dans un plan sensiblement parallèle à cette surface.

17. Dispositif selon la revendication 16, **caractérisé en ce que** les moyens de mise en précontrainte (80) comportent une tige de précontrainte (81) disposée dans ledit plan médian.

18. Dispositif selon la revendication 11 ou 16, **caractérisé en ce qu'**il comporte au moins deux plots de montage (30) distincts et un plot de montage (40) commun.

19. Dispositif selon la revendication 18, **caractérisé en ce qu'**il comporte au moins un élément déformable (20-24) s'étendant entre ledit plot de montage (40) commun et chaque plot de montage (30) distinct, lesdits éléments déformables (20-24) étant décalés angulairement d'un angle α.

20. Dispositif selon la revendication 19, **caractérisé en ce que** l'angle a est égal à une valeur choisie parmi le groupe comprenant au moins 30°, 45°, 60°, 90°,120°.

21. Dispositif selon la revendication 18, en ce qu'il comporte trois plots de montage (30) distincts et un plot de montage (40) commun, au moins un élément déformable s'étendant entre chaque paire de plots de montage (30) distincts, lesdits éléments déformables étant disposés sensiblement en triangle.

22. Dispositif selon la revendication 11 ou 16, **caractérisé en ce que** ledit élément déformable (20-24) est constitué d'une lame élastique réalisée dans une matière choisie dans le groupe comprenant au moins les aciers inoxydables à durcissement structural ou non, les alliages de titane, les alliages de cuivre au béryllium.

23. Dispositif selon la revendication 18,19 ou 21, **caractérisé en ce que** ledit élément déformable (24) et lesdits plots de montage (30, 40) sont formés d'une seule pièce dans une matière dont le coefficient de dilatation est proche de celui de la structure à mesurer, cette matière étant choisie dans le groupe comprenant au moins les aciers inoxydables à durcissement structural ou non, les alliages de titane, les alliages de cuivre au béryllium, les alliages d'aluminium à haute limite élastique.

24. Dispositif selon la revendication 23, **caractérisé en ce que** ledit élément déformable (24) est usiné ou découpé de manière à lui donner une courbure initiale en direction de sa courbure de précontrainte.

25. Dispositif selon la revendication 1, **caractérisé en ce que** ledit élément déformable (20-23) est monté par au moins une de ses extrémités dans un des plots de montage (30, 40) par au moins une technique choisie dans le groupe comprenant au moins l'encastrement, l'emboîtement, le vissage, le rivetage, le collage, la soudure.

26. Dispositif selon la revendication 25, **caractérisé en ce que** ledit plot de montage (30, 40) comporte une zone de montage (31, 41) destinée à recevoir une extrémité de l'élément déformable (20-23), cette zone de montage étant inclinée par rapport à la surface de fixation dudit plot de montage (30, 40) de manière à donner audit élément déformable (20-23) une courbure initiale en direction de sa courbure de précontrainte.

27. Dispositif selon la revendication 1, **caractérisé en ce que** lesdits plots de montage (30, 40) sont destinés à être fixés sur ladite structure (1) à mesurer par au moins une technique choisie dans le groupe comprenant au moins le vissage, le rivetage, lé collage, la soudure.

28. Dispositif selon la revendication 1, **caractérisé en ce que** les moyens de mesure (60) de la contrainte subie par ledit élément déformable (20-24) sont choisis dans le groupe comprenant au moins les jauges de contrainte résistives (61, 62), les capteurs piézo-électriques, les capteurs de proximité sans contact, les capteurs de vibration.

29. Dispositif selon la revendication 28, **caractérisé en ce que** lesdites jauges de contrainte (61, 62) sont au nombre de quatre et montées en pont de Wheatstone.

30. Dispositif selon la revendication 1, **caractérisé en ce qu'**il comporte un boîtier de protection (90) couvrant au moins partiellement lesdits plots de montage (30, 40) et le ou lesdits éléments déformables (20-24).

31. Dispositif selon la revendication 27, **caractérisé en ce que** ledit boîtier de protection est étanche.

32. Dispositif selon la revendication 27, **caractérisé en ce que** les moyens de traitement (70) des signaux comportent au moins un circuit électronique de conditionnement, ce circuit étant intégré ou rapporté audit boîtier (90), ou déporté et relié audit boîtier par des moyens de communication.

33. Dispositif selon la revendication 1, **caractérisé en ce que** lesdits moyens de traitement (70) des signaux sont agencés pour mesurer la température interne dudit dispositif et corriger les valeurs desdits signaux en fonction de cette température.

## Claims

1. A strain-measuring device (10-16) including at least a deformable element (20-24) placed between at least two mounting contacts (30, 40) defining a fixation surface for being fixed on a structure (1) to be measured, prestressing means (80) of the aforementioned deformable element (20-24), measuring means (60) of the stress undergone by the aforementioned deformable element (20-24) and treatment means (70) of measurement signals, **characterized in that** the prestressing means (80) are extended between at least the two mounting contacts (30, 40) and are arranged for drawing together these two mounting contacts (30, 40) in translation and imposing a curvature of precise prestress to the aforementioned deformable element (20-24), these prestressing means (80) being also arranged for allowing a relative displacement in translation of these two mounting contacts (30, 40) when the aforementioned deformable element (20-24) is prestressed.

2. The device according to claim 1, **characterized in that** the prestressing means (80) are freely mounted at least in translation in one of the mounting contacts (30) and are tied at least in translation to the other mounting contact (40).

3. The device according to claim 2, **characterized in that** the prestressing means (80) includes at least a prestressing rod (81), of which at least the part (83) tied in translation to the aforementioned mounting contact (40) is threaded and cooperates with at least a nut (84) for displacing the aforementioned mounting contact (40) and at least a compensation member (85) arranged for exerting a return force between the aforementioned prestressing rod (81) and one of the mounting contacts (30).

4. The device according to claim 1, **characterized in that** the prestressing means (80) are tied at least in translation to the two mounting contacts (30, 40).

5. The device according to claim 4, **characterized in that** the prestressing means (80) includes at least a prestressing rod, of which at least the parts tied in translation to the aforementioned mounting contacts (30, 40) are threaded in an opposite direction, at least two nuts arranged for receiving the aforementioned threaded parts from the prestressing rod and at least a compensation member arranged for exerting a return force between the aforementioned mounting contacts (30, 40).

6. The device according to claim 3 or 5, **characterized in that** the aforementioned nut (84) is integrated with or coupled to the aforementioned corresponding mounting contact (40).

7. The device according to claim 3 or 5, **characterized in that** the aforementioned nut (84) is made from a tapped boring (42) provided in the aforementioned mounting contact (30, 40).

8. The device according to claim 3 or 5, **characterized in that** the prestressing means (80) comprise at least a supplemental nut (86) coupled to the end of the threaded part of the aforementioned prestressing rod (81) and forming a locking counter nut.

9. The device according to claim 3 or 5, **characterized in that** the prestressing rod (81) is chosen from the group comprising at least screws, bolts, and pins.

10. The device according to claim 3 or 5, **characterized in that** the compensation member (85) is chosen from the group comprising at least springs, elastic washers, wedges of elastomer, and leaf springs.

11. The device according to claim 3 or 5, **characterized in that** it comprises a single deformable element (20,21, 22) arranged between two identical mounting contacts (30, 40) approximately parallel to the fixation surface of these contacts and arranged for deforming itself in a plane approximately perpendicular to this surface.

12. The device according to claim 11, **characterized in that** the prestressing means (80) comprise two prestressing rods (81) arranged parallely and symmetrically with respect to the median plane passing through the aforementioned deformable element (20,21).

13. The device according to claim 11, **characterized in that** the prestressing means (80) comprise a prestressing rod (81) and a guiding rod arranged parallely and symmetrically with respect to the median plane passing through the aforementioned deformable element (20,21).

14. The device according to claim 11, **characterized in that** the prestressing means (80) comprise a prestressing rod (81) arranged in the median plane passing through the aforementioned deformable element (22).

15. The device according to claim 14, **characterized in that** the aforementioned deformable element (22) includes a central hollow (22') of traverse dimensions superior to those of the aforementioned prestressing rod (81).

16. The device according to claim 3 or 5, **characterized in that** it comprises two deformable elements (23,24) arranged between two identical mounting contacts (30, 40) symmetrically with respect to a median plane of the aforementioned device, approximately perpendicular to the fixation surface of these contacts and arranged for deforming themselves in a plane approximately parallel to this surface.

17. The device according to claim 16, **characterized in that** the prestressing means (80) comprise a prestressing rod (81) arranged in the aforementioned median plane.

18. The device according to claim 11 or 16, **characterized in that** it comprises at least two distinct mounting contacts (30) and a common mounting contact (40).

19. The device according to claim 18, **characterized in that** it comprises at least a deformable element (20-24) extending between the aforementioned common mounting contact (40) and each distinct mounting contact (30), the aforementioned deformable elements (20-24) being angularly shifted from an angle α.

20. The device according to claim 19, **characterized in that** the angle α is equal to a value chosen from the group comprising at least 30°, 45°, 60°, 90°, and 120°.

21. The device according to claim 18, in that it includes three distinct mounting contacts (30) and a common mounting contact (40), at least a deformable element extending between each pair of distinct mounting contacts (30), the aforementioned deformable elements being arranged approximately in a triangle.

22. The device according to claim 11 or 16, **characterized in that** the aforementioned deformable element (20-24) is made of an elastic strip of a material chosen from the group comprising at least stainless steel with or without structural hardening, titanium alloys, and copper alloys with beryllium.

23. The device according to claim 18, 19 or 21, **characterized in that** the aforementioned deformable element (24) and the aforementioned mounting contacts (30, 40) are formed from a single piece in a material of which the coefficient of dilatation is close to that of the structure to be measured, this material being chosen from the group comprising at least stainless steel with or without structural hardening, titanium alloys, copper alloys with beryllium, and aluminum alloys having a high elastic limit.

24. The device according to claim 23, **characterized in that** the aforementioned deformable element (24) is manufactured or cut in a manner to give it an initial curvature in a direction of its prestress curvature.

25. The device according to claim 1, **characterized in that** the aforementioned deformable element (20-23) is mounted by at least one of its ends in one of the mounting contacts (30, 40) by at least a technique chosen from the group comprising at least fitting, interlocking, screwing, riveting, gluing, and welding.

26. The device according to claim 25, **characterized in that** the aforementioned mounting contact (30, 40) comprises a mounting zone (31, 41) for receiving an end of the deformable element (20-23), this mounting zone being inclined with respect to the fixation surface of the aforementioned mounting contact (30, 40) in a manner to give to the aforementioned deformable element (20-23) an initial curvature in a direction of its prestress curvature.

27. The device according to claim 1, **characterized in that** the aforementioned mounting contacts (30, 40) are for fixing on the aforementioned structure (1) to be measured by at least a technique chosen from the group comprising at least screwing, riveting, gluing, and welding.

28. The device according to claim 1, **characterized in that** the measuring means (60) of the stress undergone by the aforementioned deformable element (20-24) are chosen from the group comprising at least resistive stress gauges (61,62), piezoelectric sensors, contactless proximity sensors, and vibration sensors.

29. The device according to claim 28, **characterized in that** the aforementioned stress gauges (61,62) are four in number and mounted as a Wheatstone bridge.

30. The device according to claim 1, **characterized in that** it comprises a protective housing (90) at least partially covering the aforementioned mounting contacts (30, 40) and the aforementioned deformable element(s) (20-24).

31. The device according to claim 27, **characterized in that** the aforementioned protective housing is waterproofed.

32. The device according to claim 27, **characterized in that** the treatment means (70) of the signals comprises at least an electronic conditioning circuit, this circuit being integrated with or coupled to the aforementioned housing (90), or displaced and linked to the aforementioned housing by means of communication.

33. The device according to claim 1, **characterized in that** the aforementioned treatment means (70) of signals are arranged for measuring the internal temperature of the aforementioned device and correcting the values of the aforementioned signals as a function of this temperature.

## Patentansprüche

1. Dehnungsmessvornchtung (10-16), die mindestens ein verformbares Element (20-24), welches zwischen mindestens zwei Montageblöcken (30,40) positioniert ist, die eine Befestigungsfläche festlegen, um auf einer zu messenden Struktur (1) befestigt zu werden, Einrichtungen (80) zum Aufbauen von Vorspannung des verformbaren Elementes (20-24), Einrichtungen (60) zum Messen der durch das verformbare Element (20-24) erfahrenen Spannung sowie Einrichtungen (70) zur Bearbeitung von Messsignalen aufweist, **dadurch gekennzeichnet, dass** sich die Einrichtungen (80) zum Aufbauen von Vorspannung mindestens zwischen den zwei Montageblöcken (30,40) erstrecken und so angeordnet sind, dass sie die zwei Montageblöcke (30,40) in Form einer Verschiebung annähern und dem verformbaren Element (20-24) eine präzise Vorspannungskrümmung auferlegen, wobei die Einrichtungen (80) zum Aufbauen von Vorspannung ebenfalls so angeordnet sind, dass sie eine relative Verlagerung der zwei Montageblöcke (30,40) in Form einer Verschiebung zulassen, wenn das verformbare Element (20-24) vorgespannt ist.

2. Vorrichtung nach Anspruch 1, **dadurch gekennzeichnet, dass** die Einrichtungen (80) zum Aufbauen von Vorspannung mindestens frei verschiebbar in einem der Montageblöcke (30) angebracht sind und mindestens verschiebbar mit dem anderen Montageblock (40) verbunden sind.

3. Vorrichtung nach Anspruch 2, **dadurch gekennzeichnet, dass** die Einrichtungen (80) zum Aufbauen von Vorspannung mindestens eine Vorspannungsstange (81) umfassen, wovon mindestens der verschiebbar mit dem Montageblock (40) verbundene Teil (83) mit einem Gewinde versehen ist und mit mindestens einer Schraubenmutter (84) zusammenwirkt, um den Montageblock (40) zu verlagern, und wobei mindestens ein Ausgleichselement (85) angeordnet ist, um eine Rückholkraft zwischen der Vorspannungsstange (81) und einem der Montageblöcke (30) auszuüben.

4. Vorrichtung nach Anspruch 1, **dadurch gekennzeichnet, dass** die Einrichtungen (80) zum Aufbauen von Vorspannung mindestens verschiebbar mit den zwei Montageblöcken (30,40) verbunden sind.

5. Vorrichtung nach Anspruch 4, **dadurch gekennzeichnet, dass** die Einrichtungen (80) zum Aufbauen von Vorspannung mindestens eine Vorspannungsstange umfassen, wovon mindestens die verschiebbar mit den Montageblöcken (30,40) verbundenen Teile mit einem Gewinde in entgegengesetzter Richtung versehen sind, wobei mindestens zwei Schraubenmuttern zur Aufnahme der mit einem Gewinde versehenen Teile der Vorspannungsstange angeordnet sind, und wobei mindestens ein Ausgleichselement angeordnet ist, um eine Rückholkraft zwischen den zwei Montageblöcken (30,40) auszuüben.

6. Vorrichtung nach Anspruch 3 oder 5, **dadurch gekennzeichnet, dass** die Schraubenmutter (84) in den entsprechenden Montageblock (40) integriert oder an demselben angebracht ist.

7. Vorrichtung nach Anspruch 3 oder 5, **dadurch gekennzeichnet, dass** die Schraubenmutter (84) aus einer in dem Montageblock (30,40) vorgesehenen, mit Innengewinde versehenen Bohrung (42) besteht.

8. Vorrichtung nach Anspruch 3 oder 5, **dadurch gekennzeichnet, dass** die Einrichtungen (80) zum Aufbauen von Vorspannung mindestens eine zusätzliche Schraubenmutter (86) umfassen, die auf dem äußersten Ende des mit Gewinde versehenen Teils der Vorspannungsstange (81) angebracht ist und eine Feststell-Kontermutter ausbildet.

9. Vorrichtung nach Anspruch 3 oder 5, **dadurch gekennzeichnet, dass** die Vorspannungsstange (81) aus der mindestens Schrauben, Bolzen, Dübel umfassenden Gruppe ausgewählt ist.

10. Vorrichtung nach Anspruch 3 oder 5, **dadurch gekennzeichnet, dass** das Ausgleichselement (85) aus der mindestens Federn, Federscheiben, Elastomerkeile, Blattfedem umfassenden Gruppe ausgewählt ist.

11. Vorrichtung nach Anspruch 3 oder 5, **dadurch gekennzeichnet, dass** sie ein einziges verformbares Element (20,21,22) aufweist, welches zwischen zwei gleichen Montageblöcken (30,40) praktisch parallel zu der Befestigungsfläche der Blöcke positioniert und so angeordnet ist, dass es sich in einer praktisch parallel zu der Fläche verlaufenden Ebene verformt.

12. Vorrichtung nach Anspruch 11, **dadurch gekennzeichnet, dass** die Einrichtungen (80) zum Aufbauen von Vorspannung zwei Vorspannungsstangen (81) umfassen, die parallel und symmetrisch im Verhältnis zu der durch das verformbare Element (20,21) verlaufenden mittleren Ebene angeordnet sind.

13. Vorrichtung nach Anspruch 11, **dadurch gekennzeichnet, dass** die Einrichtungen (80) zum Aufbauen von Vorspannung eine Vorspannungsstange (81) und eine Führungsstange umfassen, die parallel und symmetrisch im Verhältnis zu der durch das verformbare Element (20,21) verlaufenden mittleren Ebene angeordnet sind.

14. Vorrichtung nach Anspruch 11, **dadurch gekennzeichnet, dass** die Einrichtungen (80) zum Aufbauen von Vorspannung eine Vorspannungsstange (81) umfassen, die in der durch das verformbare Element (22) verlaufenden mittleren Ebene angeordnet ist.

15. Vorrichtung nach Anspruch 14, **dadurch gekennzeichnet, dass** das verformbare Element (22) eine mittige Aussparung (22') mit transversalen Abmessungen aufweist, die größer als diejenigen der Vorspannungsstange (81) sind.

16. Vorrichtung nach Anspruch 3 oder 5, **dadurch gekennzeichnet, dass** sie zwei zwischen den zwei Montageblöcken (30,40) symmetrisch zu einer mittleren Ebene der Vorrichtung angeordnete verformbare Elemente (23,24) praktisch senkrecht zu der Befestigungsfläche der Blöcke aufweist, die angeordnet sind, um sich in einer Ebene praktisch parallel zu der Fläche zu verformen.

17. Vorrichtung nach Anspruch 16, **dadurch gekennzeichnet, dass** die Einrichtungen (80) zum Aufbauen von Vorspannung eine in der mittleren Ebene angeordnete Vorspannungsstange (81) umfassen.

18. Vorrichtung nach Anspruch 11 oder 16, **dadurch gekennzeichnet, dass** sie mindestens zwei getrennte Montageblöcke (30) und einen gemeinsamen Montageblock (40) aufweist.

19. Vorrichtung nach Anspruch 18, **dadurch gekennzeichnet, dass** sie mindestens ein verformbares Element (20-24) aufweist, welches sich zwischen dem gemeinsamen Montageblock (40) und jedem getrennten Montageblock (30) erstreckt, wobei die verformbaren Elemente (20-24) um einen Winkel a winklig versetzt sind.

20. Vorrichtung nach Anspruch 19, **dadurch gekennzeichnet, dass** der Winkel α gleich einem aus der aus mindestens 30°, 45°, 60°, 90°, 120° umfassenden Gruppe ausgewählten Wert ist.

21. Vorrichtung nach Anspruch 18, **dadurch gekennzeichnet, dass** sie drei getrennte Montageblöcke (30) und einen gemeinsamen Montageblock (40) aufweist, wobei sich mindestens ein verformbares Element zwischen jedem der getrennten Montageblöcke (30) erstreckt, wobei die verformbaren Elemente praktisch im Dreieck angeordnet sind.

22. Vorrichtung nach Anspruch 11 oder 16, **dadurch gekennzeichnet, dass** das verformbare Element (20-24) aus einer elastischen Lamelle besteht, die aus einem Werkstoff ausgeführt ist, der aus der Gruppe ausgewählt ist, die mindestens rostfreie Stähle mit oder ohne Aushärtung, Titanlegierungen, Beryllium Kupferle-gierungen umfasst.

23. Vorrichtung nach Anspruch 18, 19 oder 21, **dadurch gekennzeichnet, dass** das verformbare Element (24) und die Montageblöcke (30,40) aus einem einzigen Stück in einem Werkstoff ausgebildet sind, dessen Ausdehnungskoeffizient nahe an demjenigen der zu messenden Struktur liegt, wobei der Werkstoff aus der Gruppe ausgewählt ist, die mindestens rostfreie Stähle mit oder ohne Aushärtung, Titanlegierungen, Beryllium-Kupferlegierungen, Aluminiumlegierungen mit hoher Streckgrenze umfasst.

24. Vorrichtung nach Anspruch 23, **dadurch gekennzeichnet, dass** das verformbare Element (24) so bearbeitet oder ausgeschnitten wird, dass es eine anfängliche Krümmung in Richtung seiner Vorspannungskrümmung erhält.

25. Vorrichtung nach Anspruch 1, **dadurch gekennzeichnet, dass** das verformbare Element (20-23) mit mindestens einem seiner äußersten Enden in einem der Montageblöcke (30,40) mittels mindestens einer Technik angebracht wird, die aus der mindestens Einbau, Einpassung, Schrauben, Vernietung, Kleben, Schweißen umfassenden Gruppe ausgewählt ist.

26. Vorrichtung nach Anspruch 25, **dadurch gekennzeichnet, dass** der Montageblock (30,40) eine zur Aufnahme eines äußersten Endes des verformbaren Elementes (20-23) bestimmte Montagezone (31,41) aufweist, wobei die Montagezone im Verhältnis zu der Befestigungsfläche des Montageblockes (30,40) so geneigt ist, dass das verformbare Element (20-23) eine anfängliche Krümmung in Richtung seiner Vorspannungskrümmung erhält.

27. Vorrichtung nach Anspruch 1, **dadurch gekennzeichnet, dass** die Montageblöcke (30,40) zum Befestigen an der zu messenden Struktur (1) mittels mindestens einer Technik bestimmt sind, die aus der mindestens Schrauben, Vernietung, Kleben, Schweißen umfassenden Gruppe ausgewählt ist.

28. Vorrichtung nach Anspruch 1, **dadurch gekennzeichnet, dass** die Einrichtungen (60) zum Messen der durch das verformbare Element (20-24) erfahrenen Spannung aus der mindestens Widerstandsmessgeräte (61,62), piezoelektrische Sensoren, kontaktlose Näherungssensoren, Vibrationssensoren umfassenden Gruppe ausgewählt sind.

29. Vorrichtung nach Anspruch 28, **dadurch gekennzeichnet, dass** die Widerstandsmessgeräte (61,62) in der Anzahl von vier vorhanden und in Form einer Wheatstonebrücke angebracht sind.

30. Vorrichtung nach Anspruch 1, **dadurch gekennzeichnet, dass** sie ein Schutzgehäuse (90) aufweist, welches mindestens teilweise die Montageblöcke (30,40) und das oder die vorformbaren Elemente (20-24) abdeckt.

31. Vorrichtung nach Anspruch 27, **dadurch gekennzeichnet, dass** das Schutzgehäuse dicht ist.

32. Vorrichtung nach Anspruch 27, **dadurch gekennzeichnet, dass** die Signalverarbeitungseinrichtungen (70) mindestens einen elektronischen Konditionierungsschaltkreis umfassen, wobei der Schaltkreis in dem Gehäuse (90) integriert oder an demselben angebracht oder verlagert und mittels Kommunikationseinrichtungen mit dem Gehäuse verbunden ist.

33. Vorrichtung nach Anspruch 1, **dadurch gekennzeichnet, dass** die Signalverarbeitungseinrichtungen (70) zum Messen der Innentemperatur der Vorrichtung und zum Korrigieren der Werte der Signale in Abhängigkeit von der Temperatur angeordnet sind.
